# EUROPEAN PATENT APPLICATION

(11) **EP 4 769 464 A1**
(43) Date of publication of application: **01.07.2026**
(21) Application number: 25225652.4
(22) Date of filing: 19.12.2025
(51) Int. Cl.: H01H 1/60

(54) **POWER CONVERSION DEVICE, POWER SUPPLY SYSTEM, AND CONTROL METHOD FOR POWER CONVERSION DEVICE**

(30) Priority: 24.12.2024 CN 202411935021
(71) Applicant: Huawei Technologies Co., Ltd., Shenzhen, Guangdong 518129 (CN)
(72) Inventor: SUN, Zhuang, 518129 Shenzhen, Guangdong (CN); HUANG, Xiaoqiang, 518129 Shenzhen, Guangdong (CN); ZHAO, Yazhu, 518129 Shenzhen, Guangdong (CN); YU, Bo, 518129 Shenzhen, Guangdong (CN)
(74) Representative: Maiwald GmbH

(57) **Abstract**

This application provides a power conversion device, a power supply system, and a control method for the power conversion device. The power conversion device includes an inverter circuit, a controller, and at least one on-grid unit, the inverter circuit includes at least one alternating current output phase cable, each alternating current output phase cable is configured to connect to a power grid through a corresponding on-grid unit, and each on-grid unit includes a first switch and a second switch that are connected in series. The controller is configured to: when detecting that a first switch in the at least one on-grid unit is in a to-be-cleaned state, control a second switch in an on-grid unit to which the first switch in the to-be-cleaned state belongs to be turned on; after the second switch is turned on, control the inverter circuit to adjust an output voltage; and when voltages at two ends of the first switch in the to-be-cleaned state are greater than or equal to a first voltage threshold, control the first switch in the to-be-cleaned state to be turned on. In this application, heat generated by the on-grid unit can be reduced, and safety and stability of the power conversion device can be ensured. In addition, this application is easy to implement and has high applicability.

## Description

### TECHNICAL FIELD

This application relates to the field of power electronics technologies, and in particular, to a power conversion device, a power supply system, and a control method for the power conversion device.

### BACKGROUND

A power conversion device is connected to an alternating current power grid through an on-grid unit, so that the power conversion device can be off-grid when the on-grid unit is turned off, or the power conversion device can be on-grid when the on-grid unit is turned on. Because the on-grid unit may be stuck under a high voltage, the power conversion device cannot be safely off-grid, causing an off-grid fault. In view of this, the power conversion device may be connected to the power grid through two on-grid units connected in series. When one of the on-grid units is stuck or has another fault, the power conversion device controls the other on-grid unit to be turned off, to be safely off-grid.

However, after the power conversion device runs for a period of time, the two on-grid units often generate a significant amount of heat, affecting stable running of the power conversion device. Therefore, how to reduce heat generated by the two on-grid units in the power conversion device and ensure stable running of the power conversion device is a technical problem that needs to be urgently resolved by a person skilled in the art.

### SUMMARY

This application provides a power conversion device, a power supply system, and a control method for the power conversion device, to reduce heat generated by an on-grid unit and ensure safety and stability of the power conversion device. In addition, this application is easy to implement and has high applicability.

According to a first aspect, this application provides a power conversion device. The power conversion device includes an inverter circuit, a controller, and at least one on-grid unit, the inverter circuit includes at least one alternating current output phase cable, each alternating current output phase cable is configured to connect to a power grid through a corresponding on-grid unit, and each on-grid unit includes a first switch and a second switch that are connected in series. The controller is configured to: when detecting that a first switch in the at least one on-grid unit is in a to-be-cleaned state, control a second switch in an on-grid unit to which the first switch in the to-be-cleaned state belongs to be turned on; after the second switch is turned on, control the inverter circuit to adjust an output voltage; and when voltages at two ends of the first switch in the to-be-cleaned state are greater than or equal to a first voltage threshold, control the first switch in the to-be-cleaned state to be turned on. In this application, when detecting that the first switch in the at least one on-grid unit is in the to-be-cleaned state, the power conversion device may control, through the controller, the inverter circuit to adjust the output voltage after controlling the second switch to be turned on, and may control the first switch to be turned on when the voltages the two ends of the first switch are greater than or equal to the first voltage threshold. In this way, the first switch can be electrically cleaned. In addition, when the second switch is turned on first, the first switch is in a turned-off state, so that a voltage difference between two ends of the second switch is small. Therefore, no scorching occurs when the second switch is turned on. The power conversion device provided in this embodiment of this application controls a sequence of turning on the first switch and the second switch in the on-grid unit, to electrically clean the first switch. This reduces contact impedance of the first switch, further reduces heat generation, and ensures safety and stability of the power conversion device. In addition, this manner is easy to implement and has high applicability.

In a possible implementation, the power conversion device includes a plurality of alternating current output phase cables and a plurality of corresponding on-grid units, and when controlling the second switch in the on-grid unit to which the first switch in the to-be-cleaned state belongs to be turned on, the controller is specifically configured to: control the second switch in each on-grid unit and a first switch in another on-grid unit other than the on-grid unit to which the first switch in the to-be-cleaned state belongs in the plurality of on-grid units to be turned on. In this application, the power conversion device may be connected to the power grid through the plurality of alternating current output phase cables and the plurality of corresponding on-grid units. When the power conversion device electrically cleans a first switch in one of the on-grid units, the power conversion device may first control, through the controller, another first switch other than the first switch in the to-be-cleaned state and all the second switches to be first turned on, and may further control, through the controller, the first switch in the to-be-cleaned state to be turned on when the voltages at the two ends of the first switch in the to-be-cleaned state are greater than or equal to the first voltage threshold. In this way, a differential mode loop is formed, to increase a magnitude of a current flowing through the first switch, thereby better cleaning the first switch.

In a possible implementation, when controlling the second switch in each on-grid unit and the first switch in the another on-grid unit other than the on-grid unit to which the first switch in the to-be-cleaned state belongs in the plurality of on-grid units to be turned on, the controller is specifically configured to: control the inverter circuit to adjust the output voltage; and when voltages at two ends of the another on-grid unit other than the on-grid unit to which the first switch in the to-be-cleaned state belongs are less than or equal to a second voltage threshold, control the second switch in each on-grid unit to be turned on, and control the first switch in the another on-grid unit other than the on-grid unit to which the first switch in the to-be-cleaned state belongs to be turned on. In this application, before electrically cleaning the first switch in the to-be-cleaned state, the power conversion device may first adjust the output voltage through the controller, so that the voltages at the two ends of the another on-grid unit other than the on-grid unit to which the first switch in the to-be-cleaned state belongs are less than or equal to the second voltage threshold. In this case, if a voltage difference between the two ends of the another on-grid unit is small, the power conversion device controls all the second switches and the first switch in the another on-grid unit to be turned on, to reduce scorching.

In a possible implementation, when controlling the second switch in each on-grid unit and the first switch in the another on-grid unit other than the on-grid unit to which the first switch in the to-be-cleaned state belongs in the plurality of on-grid units to be turned on, the controller is specifically configured to: control a second switch in any one of the another on-grid unit other than the on-grid unit to which the first switch in the to-be-cleaned state belongs to be turned on; after controlling the second switch in any one of the another on-grid unit other than the on-grid unit to which the first switch in the to-be-cleaned state belongs to be turned on, control the inverter circuit to adjust the output voltage; and when voltages at two ends of a first switch in any one of the another on-grid unit other than the on-grid unit to which the first switch in the to-be-cleaned state belongs are less than or equal to a second voltage threshold, control the first switch in any one of the another on-grid unit other than the on-grid unit to which the first switch in the to-be-cleaned state belongs to be turned on. In this application, before electrically cleaning the first switch in the to-be-cleaned state, the power conversion device may first control, through the controller, a switch in the another on-grid unit to be turned on, and then adjust, through the controller, a voltage output by the inverter circuit, so that voltages at two ends of the other switch that is not turned on and that is in the another on-grid unit are less than or equal to the second voltage threshold. In this case, when the power conversion device controls the switch that is not turned on to be turned on, scorching can be reduced.

In a possible implementation, the power conversion device includes the power conversion device includes a plurality of alternating current output ends and a plurality of corresponding on-grid units; and when controlling the second switch in the on-grid unit to which the first switch in the to-be-cleaned state belongs to be turned on, controlling the inverter circuit to adjust the output voltage after the second switch is turned on, and controlling the first switch in the to-be-cleaned state to be turned on when the voltages at the two ends of the first switch in the to-be-cleaned state are greater than or equal to the first voltage threshold, the controller is specifically configured to: control the second switch in each on-grid unit to be turned on; after controlling the second switch in each on-grid unit to be turned on, control the inverter circuit to adjust the output voltage; and when the voltages at the two ends of the first switch in the to-be-cleaned state are greater than or equal to the first voltage threshold, control the first switch in each on-grid unit to be synchronously turned on. In this application, the power conversion device may be connected to the power grid through the plurality of alternating current output phase cables and the plurality of corresponding on-grid units. When the first switches in all the on-grid units need to be synchronously turned on, and the power conversion device electrically cleans a first switch in one of the on-grid units, the power conversion device first controls, through the controller, all the second switches to be first synchronously turned on or asynchronously turned on, and then controls all the first switches to be synchronously turned on when the voltages at the two ends of the to-be-cleaned first switch are greater than or equal to the first voltage threshold, so that the to-be-cleaned first switch can be electrically cleaned.

In a possible implementation, when controlling the second switch in each on-grid unit to be turned on, the controller is specifically configured to: control the inverter circuit to adjust the output voltage; and when voltages at two ends of another on-grid unit other than the on-grid unit to which the first switch in the to-be-cleaned state belongs are less than or equal to a second voltage threshold, control the second switch in each on-grid unit to be turned on. In this application, when the first switches in all the on-grid units need to be synchronously turned on, and the power conversion device electrically cleans a first switch in one of the on-grid units, the power conversion device may first adjust the output voltage of the inverter circuit through the controller, so that the voltages at the two ends of the another on-grid unit other than the on-grid unit to which the first switch in the to-be-cleaned state belongs are less than or equal to the second voltage threshold. In this case, when the power conversion device controls, through the controller, all the second switches to be synchronously turned on or asynchronously turned on, the second switches are not scorched. Further, when the power conversion device controls, through the controller, all the first switches to be turned on, the to-be-cleaned first switch can be electrically cleaned separately, and other first switches that do not need to be cleaned are not scorched.

In a possible implementation, when controlling the inverter circuit to adjust the output voltage, and controlling the first switch in each on-grid unit to be synchronously turned on when the voltages at the two ends of the first switch in the to-be-cleaned state are greater than or equal to the first voltage threshold, the controller is specifically configured to: control the inverter circuit to adjust the output voltage; and when the voltages at the two ends of the first switch in the to-be-cleaned state are greater than or equal to the first voltage threshold, and voltages at two ends of a first switch in another on-grid unit other than the on-grid unit to which the first switch in the to-be-cleaned state belongs are less than or equal to a second voltage threshold, control the first switch in each on-grid unit to be synchronously turned on. In this application, the power conversion device may be connected to the power grid through the plurality of on-grid units. When the first switches in all the on-grid units need to be synchronously turned on, and the power conversion device electrically cleans a first switch in one of the on-grid units, the power conversion device first controls, through the controller, all the second switches to be first synchronously turned on or asynchronously turned on, then adjusts the output voltage through the controller, and when the voltages at the two ends of the first switch in the to-be-cleaned state are greater than or equal to the first voltage threshold, and the voltages at the two ends of the another first switch are less than or equal to the second voltage threshold, controls all the first switches to be synchronously turned on. In this way, the first switch in the to-be-cleaned state can be electrically cleaned separately, and other first switches that do not need to be cleaned are not scorched.

In a possible implementation, the on-grid unit further includes a first temperature sensor and a second temperature sensor, the first temperature sensor is configured to obtain an operating temperature of the first switch, the second temperature sensor is configured to obtain an operating temperature of the second switch, and the to-be-cleaned state includes: The operating temperature of the first switch is greater than or equal to a temperature threshold. In this application, the power conversion device may separately detect the operating temperatures of the first switch and the second switch by disposing the first temperature sensor and the second temperature sensor in the on-grid unit, to accurately detect a first switch or a second switch in the to-be-cleaned state.

In a possible implementation, the power conversion device further includes a circuit board, the inverter circuit is integrated on the circuit board, the alternating current output phase cable of the inverter circuit is connected to a power pin of the first switch or a power pin of the second switch in the corresponding on-grid unit through a wire on the circuit board, and the power pin of the first switch is connected to the power pin of the second switch; and the first temperature sensor is disposed on the power pin of the first switch, and the second temperature sensor is disposed on the power pin of the second switch. In this application, the first temperature sensor may be disposed on the power pin of the first switch, and the second temperature sensor may be disposed on the power pin of the second switch, to improve temperature detection accuracy.

In a possible implementation, the power conversion device further includes a circuit board, the inverter circuit is integrated on the circuit board, the alternating current output phase cable of the inverter circuit is connected to a power pin of the first switch or a power pin of the second switch through a wire on the circuit board, and the power pin of the first switch is connected to the power pin of the second switch; and the first temperature sensor is disposed on a wire connecting the circuit board and the power pin of the first switch, and the second temperature sensor is disposed on a wire connecting the circuit board and the power pin of the second switch. In this application, the first temperature sensor may be disposed on the wire connecting the circuit board and the power pin of the first switch, and the second temperature sensor may be disposed on the wire connecting the circuit board and the power pin of the second switch, to improve temperature detection accuracy.

In a possible implementation, when detecting that the first switch in the at least one on-grid unit is in the to-be-cleaned state, the controller is specifically configured to: when the first switch and the second switch in each on-grid unit are turned on, and it is detected that an operating temperature of a first switch in the at least one on-grid unit is abnormal, control the first switch and the second switch in each on-grid unit to be turned off, and use the first switch whose operating temperature is abnormal as the first switch in the to-be-cleaned state. In this application, when the power conversion device is in an on-grid state and detects that the operating temperature of the first switch is abnormal, the power conversion device may first control all the first switches and the second switches to be turned off, control a second switch in an on-grid unit to which the first switch whose operating temperature is abnormal belongs to be turned on, after the second switch is turned on, control the inverter circuit to adjust the output voltage, and when the voltages at the two ends of the first switch in the to-be-cleaned state are greater than or equal to the first voltage threshold, control the first switch whose operating temperature is abnormal to be turned on, to electrically clean the first switch whose operating temperature is abnormal, thereby ensuring running safety of the device. An abnormal operating temperature specifically means that an operating temperature is greater than or equal to the temperature threshold.

In a possible implementation, when detecting that the first switch in the at least one on-grid unit is in the to-be-cleaned state, the controller is specifically configured to: when the power conversion device is in a startup process, and the first switch and the second switch in each on-grid unit are turned off, use the first switch in the at least one on-grid unit as the first switch in the to-be-cleaned state. Specifically, the startup process may include a series of processes such as power-on, startup, and self-detection in a process in which the power conversion device switches from a power-off state to a normal running state. In this application, in the startup process, the power conversion device may use the first switch as the first switch in the to-be-cleaned state, to electrically clean the first switch actively, thereby improving device running reliability.

According to a second aspect, this application further provides a power supply system. The power supply system includes an energy storage battery and the power conversion device according to the first aspect. The power conversion device is configured to convert a direct current from the energy storage battery into an alternating current.

According to a third aspect, this application further provides a control method for a power conversion device. The power conversion device includes an inverter circuit and at least one on-grid unit. The inverter circuit includes at least one alternating current output phase cable. Each alternating current output phase cable is configured to connect to a power grid through a corresponding on-grid unit. Each on-grid unit includes a first switch and a second switch that are connected in series. The method includes:
when it is detected that a first switch in the at least one on-grid unit is in a to-be-cleaned state, controlling a second switch in an on-grid unit to which the first switch in the to-be-cleaned state belongs to be turned on; after the second switch is turned on, controlling the inverter circuit to adjust an output voltage; and when voltages at two ends of the first switch in the to-be-cleaned state are greater than or equal to a first voltage threshold, controlling the first switch in the to-be-cleaned state to be turned on.

In a possible implementation, the power conversion device includes a plurality of alternating current output phase cables and a plurality of corresponding on-grid units; and controlling the second switch in the on-grid unit to which the first switch in the to-be-cleaned state belongs to be turned on specifically includes: controlling the second switch in each on-grid unit and a first switch in another on-grid unit other than the on-grid unit to which the first switch in the to-be-cleaned state belongs in the plurality of on-grid units to be turned on.

In a possible implementation, controlling the second switch in each on-grid unit and the first switch in the another on-grid unit other than the on-grid unit to which the first switch in the to-be-cleaned state belongs in the plurality of on-grid units to be turned on specifically includes: controlling the inverter circuit to adjust the output voltage; and when voltages at two ends of the another on-grid unit other than the on-grid unit to which the first switch in the to-be-cleaned state belongs are less than or equal to a second voltage threshold, controlling the second switch in each on-grid unit to be turned on, and controlling the first switch in the another on-grid unit other than the on-grid unit to which the first switch in the to-be-cleaned state belongs to be turned on.

In a possible implementation, controlling the second switch in each on-grid unit and the first switch in the another on-grid unit other than the on-grid unit to which the first switch in the to-be-cleaned state belongs in the plurality of on-grid units to be turned on specifically includes: controlling a second switch in any one of the another on-grid unit other than the on-grid unit to which the first switch in the to-be-cleaned state belongs to be turned on; after controlling the second switch in any one of the another on-grid unit other than the on-grid unit to which the first switch in the to-be-cleaned state belongs to be turned on, controlling the inverter circuit to adjust the output voltage; and when voltages at two ends of a first switch in any one of the another on-grid unit other than the on-grid unit to which the first switch in the to-be-cleaned state belongs are less than or equal to a second voltage threshold, controlling the first switch in any one of the another on-grid unit other than the on-grid unit to which the first switch in the to-be-cleaned state belongs to be turned on.

In a possible implementation, the power conversion device includes a plurality of alternating current output ends and a plurality of corresponding on-grid units; and controlling the second switch in the on-grid unit to which the first switch in the to-be-cleaned state belongs to be turned on, controlling the inverter circuit to adjust the output voltage after the second switch is turned on, and controlling the first switch in the to-be-cleaned state to be turned on when the voltages at the two ends of the first switch in the to-be-cleaned state are greater than or equal to the first voltage threshold specifically includes: controlling the second switch in each on-grid unit to be turned on; after controlling the second switch in each on-grid unit to be turned on; controlling the inverter circuit to adjust the output voltage; and when the voltages at the two ends of the first switch in the to-be-cleaned state are greater than or equal to the first voltage threshold, controlling the first switch in each on-grid unit to be synchronously turned on.

In a possible implementation, controlling the second switch in each on-grid unit to be turned on specifically includes: controlling the inverter circuit to adjust the output voltage; and when voltages at two ends of another on-grid unit other than the on-grid unit to which the first switch in the to-be-cleaned state belongs are less than or equal to a second voltage threshold, controlling the second switch in each on-grid unit to be turned on.

In a possible implementation, controlling the inverter circuit to adjust the output voltage, and controlling the first switch in each on-grid unit to be synchronously turned on when the voltages at the two ends of the first switch in the to-be-cleaned state are greater than or equal to the first voltage threshold specifically includes: controlling the inverter circuit to adjust the output voltage; and when the voltages at the two ends of the first switch in the to-be-cleaned state are greater than or equal to the first voltage threshold, and voltages at two ends of a first switch in another on-grid unit other than the on-grid unit to which the first switch in the to-be-cleaned state belongs are less than or equal to a second voltage threshold, controlling the first switch in each on-grid unit to be synchronously turned on.

In a possible implementation, the on-grid unit further includes a first temperature sensor and a second temperature sensor, the first temperature sensor is configured to obtain an operating temperature of the first switch, the second temperature sensor is configured to obtain an operating temperature of the second switch, and the to-be-cleaned state includes: The operating temperature of the first switch is greater than or equal to a temperature threshold.

In a possible implementation, the power conversion device further includes a circuit board, the inverter circuit is integrated on the circuit board, the alternating current output phase cable of the inverter circuit is connected to a power pin of the first switch or a power pin of the second switch in the corresponding on-grid unit through a wire on the circuit board, and the power pin of the first switch is connected to the power pin of the second switch; and the first temperature sensor is disposed on the power pin of the first switch, and the second temperature sensor is disposed on the power pin of the second switch.

In a possible implementation, the power conversion device further includes a circuit board, the inverter circuit is integrated on the circuit board, the alternating current output phase cable of the inverter circuit is connected to a power pin of the first switch or a power pin of the second switch through a wire on the circuit board, and the power pin of the first switch is connected to the power pin of the second switch; and the first temperature sensor is disposed on a wire connecting the circuit board and the power pin of the first switch, and the second temperature sensor is disposed on a wire connecting the circuit board and the power pin of the second switch.

In a possible implementation, detecting that the first switch in the at least one on-grid unit is in the to-be-cleaned state specifically includes: when the first switch and the second switch in each on-grid unit are turned on and it is detected that an operating temperature of a first switch in the at least one on-grid unit is abnormal, controlling the first switch and the second switch in each on-grid unit to be turned off, and using the first switch whose operating temperature is abnormal as the first switch in the to-be-cleaned state.

In a possible implementation, detecting that the first switch in the at least one on-grid unit is in the to-be-cleaned state specifically includes: when the power conversion device is in a startup process, and the first switch and the second switch in each on-grid unit are turned off, using the first switch in the at least one on-grid unit as the first switch in the to-be-cleaned state.

It should be understood that mutual reference may be made to the implementations and beneficial effects of the foregoing aspects of this application.

### BRIEF DESCRIPTION OF DRAWINGS

FIG. 1 is a diagram of an application scenario of a power supply system according to this application;
FIG. 2 is a diagram of another application scenario of a power supply system according to an embodiment of this application;
FIG. 3 is a diagram of a framework of a power conversion device according to an embodiment of this application;
FIG. 4 is a diagram of a connection manner of a power conversion device according to an embodiment of this application;
FIG. 5 is a diagram of another connection manner of a power conversion device according to an embodiment of this application;
FIG. 6 is a diagram of another framework of a power conversion device according to an embodiment of this application;
FIG. 7 is a diagram of still another framework of a power conversion device according to an embodiment of this application; and
FIG. 8 is a schematic flowchart of a control method for a power conversion device according to an embodiment of this application.

### DESCRIPTION OF EMBODIMENTS

A power supply system provided in embodiments of this application may be a new energy power station, an energy storage station, a flexible power transmission system, a microgrid, or the like, and is applicable to different application scenarios, for example, a photovoltaic power supply scenario and an energy storage power supply scenario. For ease of understanding, the following uses an example in which the power supply system is an energy storage station and an application scenario is an energy storage power supply scenario for description.

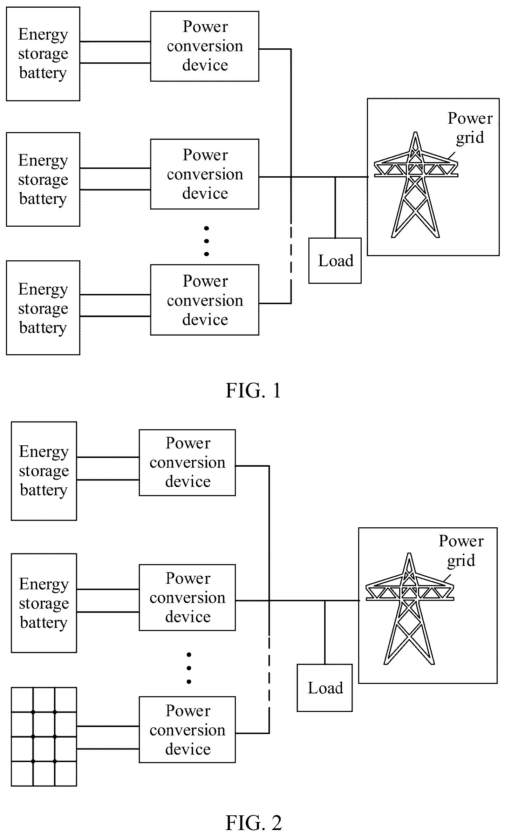

FIG. 1 is a diagram of an application scenario of the power supply system according to this application. The power supply system provided in this application may include a direct current power supply and at least one power conversion device. The direct current power supply may be specifically an energy storage battery. For example, if the power supply system includes a plurality of power conversion devices, a direct current end of each power conversion device may be connected to the energy storage battery, and alternating current output ends of the plurality of power conversion devices may be connected in parallel and then are connected to an alternating current load. The alternating current load may be understood as a power grid. The power grid is an alternating current network including substations and power transmission and distribution lines of various voltages, and may provide a power frequency alternating current for a load. The power grid may be a single-phase alternating current power grid or a three-phase alternating current power grid. This is not specifically limited in embodiments of this application. Alternatively, the alternating current load may be understood as a load, for example, may be an electrical device such as a battery, a communication base station, or a home device. For ease of description, the following uses an example in which the alternating current load is a power grid for description.

When the power supply system is connected to the power grid through the power conversion device, the energy storage battery may exchange electric energy with the power grid through the power conversion device. For example, the power conversion device outputs, to the alternating current load, electric energy provided by the energy storage battery, or the power conversion device may transmit, to the direct current power supply for charging, electric energy provided by the alternating current load. The power supply system may further be off-grid through the power conversion device, to optimize energy utilization. Therefore, in the power supply system provided in embodiments of this application, an on-grid unit is disposed in the power conversion device. When the on-grid unit is turned off, the power conversion device is disconnected from the power grid, and the power supply system is off-grid. On the contrary, when the on-grid unit is turned on, the power conversion device is connected to the power grid, and the power supply system is on-grid. In this way, the power supply system is on-grid or off-grid.

In some feasible implementations, the direct current power supply in the power supply system may be a photovoltaic array. In this case, for a diagram of a structure of the power supply system, refer to FIG. 2. FIG. 2 is a diagram of another application scenario of a power supply system according to an embodiment of this application. Direct current ends of some of a plurality of power conversion devices in the power supply system shown in FIG. 2 may be connected to corresponding photovoltaic arrays. The photovoltaic array includes one or more photovoltaic strings connected in parallel, and one photovoltaic string may be obtained by connecting one or more photovoltaic modules in series. The photovoltaic array may convert light energy into electric energy, and transmit, in a direct current manner, the generated electric energy to the direct current end of the power conversion device, or transmit the generated electric energy to the energy storage battery for storage. It may be understood that a power conversion device connected to the photovoltaic array in the power supply system may be an inverter, and a power conversion device connected to the energy storage battery in the power supply system may be a converter.

Similarly, in the application scenario shown in FIG. 2, the power supply system may also be connected to the power grid or disconnected from the power grid through the power conversion device, to optimize energy utilization.

It should be noted that, after the power supply system runs for a period of time, to prevent the on-grid unit of the power conversion device from generating a significant amount of heat, which further affects stable running of the power supply system, in the power supply system provided in this embodiment of this application, the power conversion device may detect an operating temperature of the on-grid unit in real time, and clean an on-grid unit with an excessively high temperature in a timely manner, or the power conversion device may clean the on-grid unit in a startup process, so that after the power conversion device completes the startup and is on-grid, heat generated by the on-grid unit can be reduced, and stable running of the power conversion device and the power supply system can be ensured.

The foregoing description is merely an example of the application scenario of the power supply system provided in this application, but is not exhaustive. The application scenario is not limited in this application.

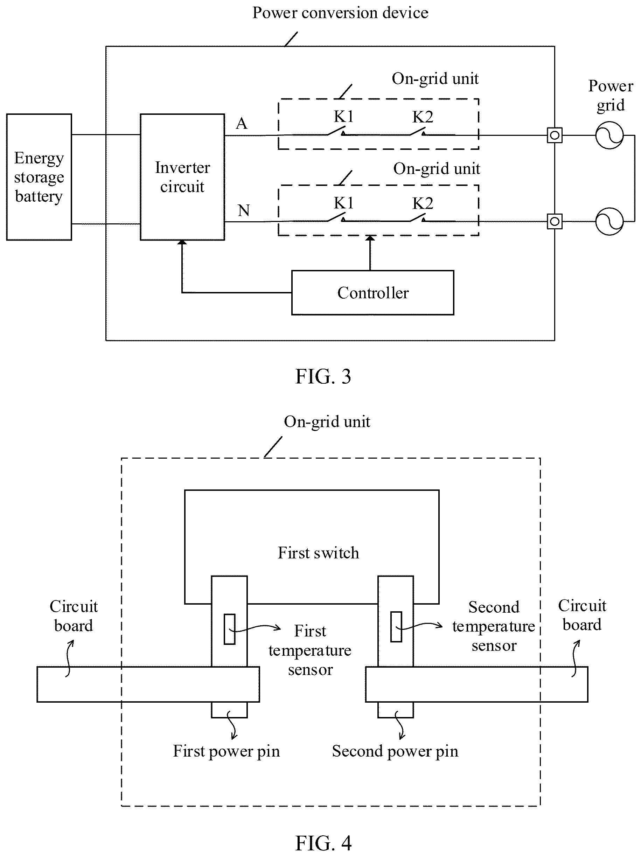

To facilitate understanding of an implementation process in which the power conversion device cleans the on-grid unit, the following describes, with reference to FIG. 3 to FIG. 7, a working principle of the power conversion device provided in embodiments of this application.

It should be noted that, in some application scenarios, the power conversion device may be connected to the power grid through one live wire and one neutral wire, that is, supply power to the power grid by using a single-phase system. Alternatively, the power conversion device may be connected to the power grid through three live wires, that is, supply power to the power grid by using a three-phase three-wire system. Alternatively, the power conversion device may be connected to the power grid through three live wires and one neutral wire, that is, supply electric energy to the power grid by using a three-phase four-wire system. The neutral wire of the power conversion device is used as a wire that provides a current loop for the power grid, to ensure that the power conversion device and the power grid form a power supply loop.

In some feasible implementations, when the power conversion device is connected to the power grid by using a single-phase system, for a manner of connecting the power conversion device to the power grid, refer to FIG. 3. FIG. 3 is a diagram of a framework of a power conversion device according to an embodiment of this application.

The power conversion device shown in FIG. 3 includes an inverter circuit, a controller, and two on-grid units. A direct current input end of the inverter circuit is connected to an energy storage battery, an alternating current output end of the inverter circuit is connected to a power grid through alternating current output phase cables, that is, a live wire A and a neutral wire N, and an on-grid switch is disposed on each alternating current output phase cable. When the on-grid unit is turned on, the inverter circuit may perform, under control of the controller, inversion conversion on a direct current provided by the energy storage battery, and output an alternating current obtained through inversion conversion to the power grid for power supply; or the inverter circuit may perform rectification conversion on an alternating current provided by the power grid, and supply a direct current obtained through rectification conversion to the energy storage battery for charging. The energy storage battery may include one or more battery units connected in series or in parallel. In addition, when the on-grid unit is turned off, the inverter circuit is disconnected from the power grid, and the power conversion device no longer exchanges electric energy with the power grid.

The on-grid unit specifically includes a first switch K1 and a second switch K2, and the first switch K1 and the second switch K2 are connected in series between the inverter circuit and the power grid. For example, as shown in FIG. 3, one end of the first switch K1 is connected to the alternating current output end of the inverter circuit, the other end of the first switch K1 is connected to the second switch K2, and the other end of the second switch K2 connected to the first switch K1 is connected to the power grid. It should be noted that positions of the first switch K1 and the second switch K2 may be switched. To be specific, the first switch K1 may be disposed on a side close to the power grid, and the second switch K2 may be disposed on the other side close to the inverter circuit. Specific positions of the first switch K1 and the second switch K2 are not limited in this embodiment of this application. FIG. 3 is merely an example. For ease of description, the following uses an example in which the first switch K1 is disposed on an inverter circuit side and the second switch K2 is disposed on a power grid side for description.

The controller may control the first switch K1 and the second switch K2 in the on-grid unit to be turned off or turned on, to switch a working status of the on-grid unit. Specifically, when the controller controls both the first switch K1 and the second switch K2 to be turned off, the on-grid unit is turned off, the power conversion device is disconnected from the power grid, and the energy storage battery does not exchange electric energy with the power grid. When the controller controls both the first switch K1 and the second switch K2 to be turned on, the on-grid unit is turned on, the power conversion device is conducted and connected to the power grid, and the energy storage battery may exchange electric energy with the power grid.

When the on-grid unit is turned on, a value of a current flowing through the first switch K1 and the second switch K2 is large. As a result, the first switch K1 or the second switch K2 may be overheated and stuck, affecting stability and safety of the power conversion circuit. When one of the switches is stuck, the power conversion device in this embodiment of this application may control, through the controller, the other switch to be turned off, to ensure that the power conversion device is safely off-grid. In other words, in this embodiment of this application, the first switch K1 and the second switch K2 that are connected in series are disposed in the power conversion device between the inverter circuit and the power grid, so that safety of the power conversion device can be improved, and a safety risk caused by switch sticking can be avoided.

Further, after the power conversion device runs for a period of time, the first switch K1 and the second switch K2 often generate a significant amount of heat. A reason is that as operating time of the power conversion device increases, contaminants gradually accumulate on a contact surface of the first switch K1 or the second switch K2, causing an increase in contact impedance of the first switch K1 or the second switch K2. It may be understood that, when the first switch K1 and the second switch K2 are in a turned-on state for a long time, the increase in the contact impedance causes temperatures of a power pin of the first switch K1 and a power pin of the second switch K2 to be excessively high. Consequently, stable running of the power conversion device is affected. Therefore, the power conversion device in this embodiment of this application may electrically clean the first switch K1 or the second switch K2 in the on-grid unit when the contact impedance of the first switch K1 or the second switch K2 is excessively large, to remove contaminants accumulated on a surface of the first switch K1 or the second switch K2. This effectively reduces the contact impedance of the first switch K1 or the second switch K2, and prolongs a service life of the first switch K1 or the second switch K2. Mover, less heat is generated, and stability and safety of the power conversion device can be ensured.

It should be noted that electrical cleaning means that voltages at two ends of a switch are kept large when the switch is turned on, to remove contaminants on a contact by using a voltage difference between the two ends of the switch at a moment when the switch is turned on. Therefore, in this embodiment of this application, the power conversion device may control, through the controller, the first switch K1 or the second switch K2 to be turned on when voltages at two ends of the first switch K1 or the second switch K2 are large, to perform electrical cleaning.

It may be understood that, to enable the controller to electrically clean, in a timely manner, the first switch K1 or the second switch K2 whose contact impedance is excessively large, and avoid affecting stability and safety of the power conversion device, the power conversion device provided in this embodiment of this application may obtain operating temperatures of the first switch K1 and the second switch K2 during running, and when the operating temperature of the first switch K1 or the second switch K2 is greater than or equal to a temperature threshold, the controller determines that the first switch K1 or the second switch K2 whose operating temperature is greater than or equal to the temperature threshold is in a to-be-cleaned state, that is, the first switch K1 or the second switch K2 in the to-be-cleaned state needs to be electrically cleaned in time. The temperature threshold is a minimum value of the operating temperature of the first switch K1 or the second switch K2 when the contact impedance of the first switch K1 or the second switch K2 is excessively large and a significant amount of heat is caused. In other words, when the operating temperature of the first switch K1 or the second switch K2 is greater than or equal to the temperature threshold, the contact impedance of the first switch K1 or the second switch K2 is excessively large, and the first switch K1 or the second switch K2 needs to be electrically cleaned. On the contrary, when the operating temperature of the first switch K1 or the second switch K2 is less than the temperature threshold, the first switch K1 or the second switch K2 does not need to be electrically cleaned. It should be noted that temperature thresholds of the first switch K1 and the second switch K2 may be different or the same, and a specific value of a temperature threshold of each switch may be adjusted based on an actual application scenario. This is not limited in this embodiment of this application.

Therefore, in this embodiment of this application, the on-grid unit is provided with a first temperature sensor and a second temperature sensor, the first temperature sensor may detect the operating temperature of the first switch K1 and send a detection result to the controller, and the second temperature sensor may detect the operating temperature of the second switch K2 and send a detection result to the controller. When a received operating temperature of the first switch K1 or the second switch K2 is greater than or equal to the temperature threshold, the controller may determine that the first switch K1 or the second switch K2 whose operating temperature is greater than or equal to the temperature threshold is in the to-be-cleaned state. Contact impedance of a switch in the to-be-cleaned state is excessively large, and contaminants on a surface of the switch need to be electrically cleaned. Further, after determining that the switch in the to-be-cleaned state is the first switch K1 or the second switch K2, the controller may control both the first switch K1 and the second switch K2 to be turned off, that is, control the power conversion device to be off-grid, then electrically clean the switch in the to-be-cleaned state, and after completing electrical cleaning, control the first switch K1 and the second switch K2 to be turned off, so that the power conversion device remains off-grid before the power conversion device needs to be on-grid.

In some feasible implementations, to enable the first temperature sensor to accurately measure the operating temperature of the first switch K1, the first temperature sensor may be disposed on the power pin of the first switch K1. In this case, a specific connection structure between the first temperature sensor and the first switch K1 may be shown in FIG. 4. FIG. 4 is a diagram of a connection manner of a power conversion device according to an embodiment of this application. The power conversion device shown in FIG. 4 includes circuit boards and an on-grid unit. An inverter circuit is integrated on a circuit board, and an alternating current output phase cable of the inverter circuit may be connected to the first power pin of the first switch K1 in the on-grid unit through a wire on the circuit board. The second power pin of the first switch K1 in the on-grid unit may be connected to the power grid through a wire on a circuit board. To accurately measure the operating temperature of the first switch K1, the first temperature sensor is further disposed in the on-grid unit. The first temperature sensor may be disposed on the first power pin or the second power pin while ensuring insulation performance. Because the first temperature sensor is disposed at a position close to the power pin of the first switch K1, accuracy of detecting the operating temperature of the first switch K1 can be improved.

Similarly, to enable the second temperature sensor to accurately measure the operating temperature of the second switch K2, the second temperature sensor may be disposed on the power pin of the second switch K2. In this case, a specific connection structure between the second temperature sensor and the second switch K2 may be shown in FIG. 4. For details, refer to the foregoing content. Details are not described herein again in this embodiment of this application.

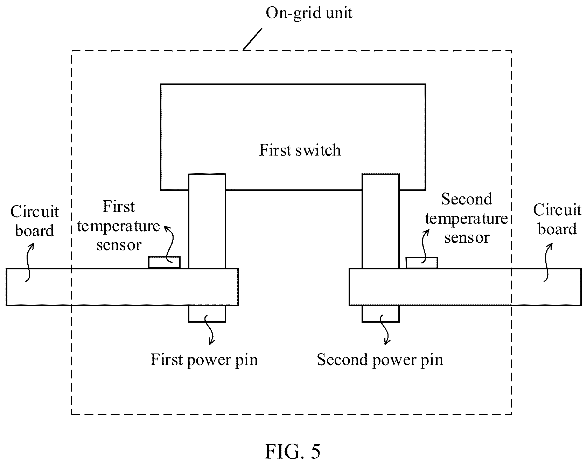

In some feasible implementations, to enable the first temperature sensor to accurately measure the operating temperature of the first switch K1, the first temperature sensor may be alternatively disposed on a wire connecting the circuit board and the power pin of the first switch K1. In this case, a specific connection structure between the first temperature sensor and the first switch K1 may be shown in FIG. 5. FIG. 5 is a diagram of another connection manner of a power conversion device according to an embodiment of this application. The power conversion device shown in FIG. 5 includes circuit boards and an on-grid unit. An inverter circuit is integrated on a circuit board, and an alternating current output phase cable of the inverter circuit may be connected to the first power pin of the first switch K1 in the on-grid unit through a wire on the circuit board. The second power pin of the first switch K1 in the on-grid unit may be connected to the power grid through a wire on a circuit board. To accurately measure the operating temperature of the first switch K1, the first temperature sensor is disposed in the on-grid unit. When insulation performance is ensured, the first temperature sensor may be disposed on a wire connecting the circuit board and the first power pin or disposed on a wire connecting the circuit board and the second power pin. Because the first temperature sensor is disposed at a position close to the power pin of the first switch K1, accuracy of detecting the operating temperature of the first switch K1 can be improved.

Similarly, to enable the second temperature sensor to accurately measure the operating temperature of the second switch K2, the second temperature sensor may be disposed on a wire connecting the circuit board and the power pin of the second switch K2. In this case, a specific connection structure between the second temperature sensor and the second switch K2 may be shown in FIG. 5. For details, refer to the foregoing content. Details are not described herein again in this embodiment of this application.

In some feasible implementations, in addition to detecting operating temperatures of first switches K1 and second switches K2 in real time, the power conversion device provided in this embodiment of this application may determine, when detecting that the operating temperature of the first switch K1 or the second switch K2 is greater than or equal to the temperature threshold, that the first switch K1 or the second switch K2 is in the to-be-cleaned state, and electrically clean the first switch K1 or the second switch K2 in time. Alternatively, the power conversion device may determine, in a startup process, that the first switch K1 or the second switch K2 in the on-grid unit is in the to-be-cleaned state, and actively and periodically clean the first switch K1 or the second switch K2 in the on-grid unit in the startup process, so that after the power conversion device completes the startup and is on-grid, less heat is generated by the first switch K1 and the second switch K2 in the on-grid unit, and stable running of the power conversion device can be ensured.

In some feasible implementations, in this embodiment of this application, the following content is described by using an example in which a to-be-cleaned state switch is the first switch K1 and the first switch K1 is electrically cleaned. It may be understood that, if the controller of the power conversion device detects, through the first temperature sensor, that the operating temperature of the first switch K1 in the on-grid unit is greater than or equal to the temperature threshold, the controller determines that the first switch K1 is a switch in the to-be-cleaned state. When the power conversion device is off-grid, that is, both the first switch K1 and the second switch K2 are turned off, the controller may first control the second switch K2 to be turned on, and then control the first switch K1 to be turned on after the second switch K2 is turned on.

It should be noted that, before the second switch K2 is turned on, the first switch K1 is also in a turned-off state, and a voltage difference between two ends of the second switch K2 may be ignored. In this case, the controller controls the second switch K2 to be turned on, to reduce scorching of the second switch K2. Further, after the second switch K2 is turned on, a voltage at one end of the first switch K1 is clamped by the power grid, and a voltage at the other end is related to an output voltage of the connected inverter circuit. Therefore, the controller may control the inverter circuit to adjust the output voltage, to adjust a voltage at the end that is of the first switch K1 and that is connected to the inverter circuit, so that voltages at the two ends of the first switch K1 change, and when the voltages at the two ends of the first switch K1 are greater than or equal to a first voltage threshold, the controller controls the first switch K1 to be turned on, to electrically clean the first switch K1. The first voltage threshold may be understood as a minimum value of each of the voltages at the two ends of the first switch K1 at a moment when the first switch K1 is turned on to remove contaminants on a surface of a contact. In other words, when the voltages at the two ends of the first switch K1 are less than the first voltage threshold at the moment when the first switch K1 is turned on, the contaminants on the surface of the contact cannot be cleaned when the first switch K1 is turned on. On the contrary, when the voltages at the two ends of the first switch K1 are greater than or equal to the first voltage threshold at the moment when the first switch K1 is turned on, the contaminants on the surface of the contact are removed when the first switch K1 is turned on. A specific value of the first voltage threshold may be adjusted based on an actual application scenario. Examples are not enumerated in this embodiment of this application.

In addition, that the controller controls the inverter circuit to adjust the output voltage specifically means that the controller transmits a pulse width modulation signal to the inverter circuit, to adjust an action of each bridge arm in the inverter circuit, so that amplitude of a voltage output by each bridge arm in the inverter circuit to an alternating current output end of each bridge arm changes, to regulate the output voltage.

It may be understood that, after electrically cleaning the first switch K1, the controller may keep the first switch K1 and the second switch K2 turned on, so that the power conversion device remains on-grid and exchanges electric energy with the power grid. Alternatively, after electrically clean the first switch K1, the controller may control the first switch K1 and the second switch K2 to be turned off, so that the power conversion device is off-grid, and when the power conversion device needs to be on-grid, the controller controls the first switch K1 and the second switch K2 to be turned on. In this embodiment of this application, after the power conversion device completes electrically clean the first switch K1, turned-on states of the first switch K1 and the second switch K2 are not limited.

Similarly, when the controller of the power conversion device detects, through the second temperature sensor, that the operating temperature of the second switch K2 in the on-grid unit is greater than or equal to the temperature threshold, the controller determines that the second switch K2 is in the to-be-cleaned state. When the power conversion device is off-grid, that is, both the first switch K1 and the second switch K2 are turned off, the controller may first control the first switch K1 to be turned on, and after the first switch K1 is turned on, the controller controls the inverter circuit to adjust the output voltage, to adjust a voltage at a side that is of the second switch K2 and that is close to the inverter circuit, so that voltages at the two ends of the second switch K2 change, and when the voltages at the two ends of the second switch K2 are greater than or equal to the first voltage threshold, the controller controls the second switch K2 to be turned on, to electrically clean the second switch K2. It may be understood that when the to-be-cleaned switch is the first switch K1 or the second switch K2, first voltage thresholds used by the controller may be the same or different.

When detecting that the first switch in the at least one on-grid unit is in the to-be-cleaned state, the power conversion device provided in this embodiment of this application may control, through the controller, the inverter circuit to adjust the output voltage after controlling the second switch to be turned on, and control the first switch to be turned on when the voltages at the two ends of the first switch are greater than or equal to the first voltage threshold, to electrically clean the first switch. In addition, when the second switch is turned on first, the first switch is in a turned-off state, so that a voltage difference between the two ends of the second switch is small. Therefore, no scorching occurs when the second switch is turned on. The power conversion device provided in this embodiment of this application controls a sequence of turning on the first switch and the second switch in the on-grid unit, to electrically clean the first switch. This reduces contact impedance of the first switch, further reduces heat generation, and ensures safety and stability of the power conversion device. In addition, this manner is easy to implement and has high applicability.

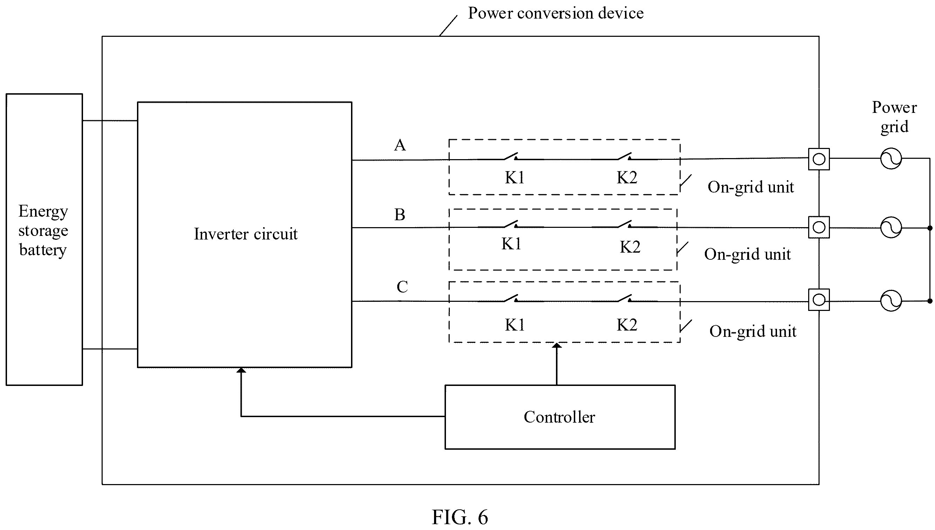

In some feasible implementations, when the power conversion device is connected to the power grid by using a three-phase three-wire system, for a manner of connecting the power conversion device to the power grid, refer to FIG. 6. FIG. 6 is a diagram of another framework of a power conversion device according to an embodiment of this application.

The power conversion device shown in FIG. 6 includes an inverter circuit, a controller, and three on-grid units. A direct current input end of the inverter circuit is connected to an energy storage battery, and three alternating current output ends of the inverter circuit are respectively connected to an alternating current output phase cable A, an alternating current output phase cable B, and an alternating current output phase cable C, and the three on-grid units are respectively disposed on the alternating current output phase cable A, the alternating current output phase cable B, and the alternating current output phase cable C, so that each of the three alternating current output ends of the inverter circuit is connected to the power grid through a corresponding on-grid unit. When all the three on-grid units are turned on, the inverter circuit may perform, under control of the controller, inversion conversion on a direct current provided by the energy storage battery, and output an alternating current obtained through inversion conversion to the power grid for power supply, or the inverter circuit may perform rectification conversion on an alternating current provided by the power grid, and supply a direct current obtained through rectification conversion to the energy storage battery for charging. The energy storage battery may include one or more battery units connected in series or in parallel. In addition, when all the three on-grid units are turned off, the inverter circuit is disconnected from the power grid, and the power conversion device no longer exchanges electric energy with the power grid.

A first switch K1 and a second switch K2 are disposed in each of the three on-grid units, and the first switch K1 and the second switch K2 are connected in series between an alternating current output end of the inverter circuit and the power grid. For example, as shown in FIG. 6, one end of the first switch K1 in each on-grid unit is connected to the alternating current output end of the inverter circuit, the other end of the first switch K1 is connected to the second switch K2, and the other end of the second switch K2 connected to the first switch K1 is connected to the power grid. It should be noted that positions of the first switch K1 and the second switch K2 in each on-grid unit may be switched. To be specific, the first switch K1 may be disposed on a side close to the power grid, and the second switch K2 may be disposed on the other side close to the inverter circuit. Specific positions of the first switch K1 and the second switch K2 in each on-grid unit are not limited in this embodiment of this application. FIG. 6 is merely an example. For ease of description, the following uses an example in which the first switch K1 in each on-grid unit is disposed on an inverter circuit side and the second switch K2 is disposed on a power grid side for description.

It may be understood that a first temperature sensor and a second temperature sensor may be disposed in each on-grid unit, to detect operating temperatures of the first switch K1 and the second switch K2 and determine a to-be-cleaned switch. In this embodiment of this application, the following content is described by using an example in which the to-be-cleaned switch is a first switch K1 in an on-grid unit disposed on the phase cable A.

In some feasible implementations, if the controller of the power conversion device detects, through the first temperature sensor, that the operating temperature of the first switch K1 in the on-grid unit is greater than or equal to a temperature threshold, the controller determines that the first switch K1 is in the to-be-cleaned state, and the first switch K1 in the to-be-cleaned state and a first switch K1 in another on-grid unit do not need to be synchronously turned on. In this case, when the power conversion device is off-grid, that is, when first switches K1 and second switches K2 in all the on-grid units are turned off, the on-grid unit on the alternating current output phase cable A may be used as a target on-grid unit. First, the controller in the power conversion device may control a second switch K2 in the target on-grid unit to be turned on. After the second switch K2 is turned on, a voltage at one end of the first switch K1 on the alternating current output phase cable A is clamped by the power grid, and a voltage at the other end is related to a voltage at the alternating current output end of the connected inverter circuit. Therefore, the controller may control the inverter circuit to adjust a voltage at the alternating current output end connected to the alternating current output phase cable A, that is, adjust an output voltage, to adjust a voltage at one end of the first switch K1 in the target on-grid unit, so that voltages at two ends of the first switch K1 change, and when the voltages at the two ends of the first switch K1 are greater than or equal to a first voltage threshold, the controller controls the first switch K1 to be turned on, to electrically clean the first switch K1. It should be noted that, in an electrical cleaning process of the first switch K1 on the alternating current output phase cable A, a first switch K1 and a second switch K2 on the alternating current output phase cable B and a first switch K1 and a second switch K2 on the alternating current output phase cable C may remain in a turned-off state, that is, the controller only needs to control the first switch K1 and the second switch K2 in the target on-grid unit to be turned on, to electrically clean the first switch K1 in the target on-grid unit. An implementation principle is simple, and it is easy to operate.

It may be understood that, when the controller of the power conversion device detects, through the second temperature sensor, that an operating temperature of the second switch K2 on the alternating current output phase cable A is greater than or equal to a temperature threshold, the controller determines that the second switch K2 on the alternating current output phase cable A is in the to-be-cleaned state. When first switches K1 and second switches K2 of all the on-grid units are turned off, the power conversion device may first control, through the controller, the first switch K1 on the alternating current output phase cable A to be turned on, after the first switch K1 is turned on, the controller controls the inverter circuit to adjust a voltage at the alternating current output end corresponding to the alternating current output phase cable A, that is, adjust the output voltage, to adjust a voltage on a side that is of the second switch K2 on the alternating current output phase cable A and that is close to the inverter circuit, so that voltages at two ends of the second switch K2 change, and when the voltages at the two ends of the second switch K2 are greater than or equal to the first voltage threshold, the controller controls the second switch K2 to be turned on, to electrically clean the second switch K2 on the phase cable A. In addition, in an electrical cleaning process of the second switch K2 on the alternating current output phase cable A, the first switch K1 and the second switch K2 on the alternating current output phase cable B and the first switch K1 and the second switch K2 on the alternating current output phase cable C may remain in a turned-off state, that is, the controller only needs to control the first switch K1 and the second switch K2 in the target on-grid unit to be turned on, to electrically clean the second switch K2 in the target on-grid unit. An implementation principle is simple, and it is easy to operate.

In some feasible implementations, referring to FIG. 6 again, after the power conversion device determines, through the controller, that the first switch K1 on the alternating current output phase cable A is in the to-be-cleaned state, the power conversion device may turn on all first switches K1 and all second switches K2 other than the first switch K1 on the alternating current output phase cable A when the first switches K1 and the second switches K2 of all the on-grid units are turned off, and then control the first switch K1 on the alternating current output phase cable A to be turned on, to electrically clean the first switch K1 on the alternating current output phase cable A.

Specifically, the controller may use the on-grid unit on the alternating current output phase cable A as the target on-grid unit, and control the second switch K2 in each on-grid unit and a first switch K1 in another on-grid unit other than the target on-grid unit to be turned on, that is, control the first switch K1 and the second switch K2 on the alternating current output phase cable B, the first switch K1 and the second switch K2 on the alternating current output phase cable C, and the second switch K2 on the alternating current output phase cable A to be turned on. Further, after each second switch K2, the first switch K1 on the alternating current output phase cable B, and the first switch K1 on the alternating current output phase cable C are turned on, the controller may control the inverter circuit to adjust the voltage at the alternating current output end corresponding to the alternating current output phase cable A, that is, adjust the output voltage, to adjust a voltage at one end of the first switch K1 (namely, the first switch K1 in the target on-grid unit) on the alternating current output phase cable A, so that the voltages at the two ends of the first switch K1 change, and when the voltages at the two ends of the first switch K1 are greater than or equal to the first voltage threshold, the controller controls the first switch K1 in the target on-grid unit to be turned on, to electrically clean the first switch K1.

It should be noted that, when the first switch K1 on the alternating current output phase cable A is in the to-be-cleaned state, if only the second switch K2 on the alternating current output phase cable A is turned on, and the first switch K1 or the second switch K2 on the alternating current output phase cable B and the first switch K1 or the second switch K2 on the alternating current output phase cable C are not turned on, when the controller controls the first switch K1 on the alternating current output phase cable A to be turned on, an electrical signal output by the alternating current output end of the inverter circuit can be transmitted to the power grid only through the alternating current output phase cable A. Because there is no differential mode loop, a current flowing through the alternating current output phase cable A is small, and cleaning effect on the first switch K1 is reduced. Therefore, in this embodiment of this application, the power conversion device controls, through the controller, all switches other than the first switch K1 on the alternating current output phase cable A to be first turned on, and then controls the first switch K1 on the alternating current output phase cable A to be turned on when the voltages at the two ends of the first switch K1 are greater than or equal to the first voltage threshold. In this way, a differential mode loop may be formed between the alternating current output phase cables, to increase a magnitude of a current flowing through the to-be-cleaned first switch, thereby achieving better cleaning effect.

It may be understood that, when a switch in the to-be-cleaned state is the second switch K2 on the alternating current output phase cable A, and the first switches K1 and the second switches K2 of all the on-grid units are turned off, the power conversion device may control, through the controller, the first switch K1 on the alternating current output phase cable A, the first switch K1 and the second switch K2 on the alternating current output phase cable B, and the first switch K1 and the second switch K2 on the alternating current output phase cable C to be turned on, then the controller controls the inverter circuit to adjust the voltage at the alternating current output end corresponding to the alternating current output phase cable A, to adjust a voltage on a side that is of the second switch K2 on the alternating current output phase cable A and that is close to the inverter circuit, so that the voltages at the two ends of the second switch K2 change, and when the voltages at the two ends of the second switch K2 are greater than or equal to the first voltage threshold, the controller controls the second switch K2 to be turned on, to electrically clean the second switch K2 on the alternating current output phase cable A.

Similarly, when the controller determines that the first switch K1 on the alternating current output phase cable B or on the alternating current output phase cable C is in the to-be-cleaned state, the controller may electrically clean the first switch K1 on the alternating current output phase cable B or on the alternating current output phase cable C based on the foregoing specific implementation of electrically cleaning the first switch K1 on the alternating current output phase cable A. Similarly, when the controller determines that the second switch K2 on the alternating current output phase cable B or on the alternating current output phase cable C is in the to-be-cleaned state, the controller may electrically clean the second switch K2 on the alternating current output phase cable B or on the alternating current output phase cable C based on the foregoing specific implementation of electrically cleaning the second switch K2 on the alternating current output phase cable A. Details are not described herein in this embodiment of this application.

In some feasible implementations, it can be learned from the foregoing content that when the first switch K1 is in the to-be-cleaned state, the controller may use an on-grid unit to which the first switch K1 in the to-be-cleaned state belongs as the target on-grid unit. Before controlling the first switch K1 in the target on-grid unit to be turned on, the controller may first control the another on-grid unit other than the first switch K1 in the target on-grid unit to be first turned on. To reduce scorching generated when another switch other than the to-be-cleaned first switch K1 is turned on, when the first switches K1 and the second switches K2 of all the on-grid units are turned off, the controller may first control the inverter circuit to adjust a voltage at an alternating current output end connected to the another on-grid unit, that is, adjust the output voltage. Further, when a difference between the voltage at the alternating current output end connected to the another on-grid unit and a voltage of the power grid is less than or equal to a second voltage threshold, that is, when voltages at two ends of the another on-grid unit other than the target on-grid unit are less than or equal to the second voltage threshold, the controller controls the second switch K2 in each on-grid unit and a first switch K1 in the another on-grid unit to be turned on. It may be understood that, when the voltages at the two ends of the another on-grid unit other than the target on-grid unit are less than or equal to the second voltage threshold, a voltage difference between two ends of the first switch K1 or two ends of a second switch K2 in the another on-grid unit is also less than or equal to the second voltage threshold. The second voltage threshold may be understood as a maximum value of each of the voltages at the two ends of the first switch K1 or the two ends of the second switch K2 when the first switch K1 or the second switch K2 is not scorched at a moment of being turned on. In other words, when the voltages at the two ends of the first switch K1 or the two ends of the second switch K2 at the moment of being turned on are less than or equal to the second voltage threshold, no scorching occurs when the first switch K1 or the second switch K2 is turned on. On the contrary, when the voltages at the two ends of the first switch K1 or the two ends of the second switch K2 at the moment of being turned on are greater than the second voltage threshold, scorching occurs when the first switch K1 or the second switch K2 is turned on. Therefore, when the voltages at the two ends of the another on-grid unit are less than or equal to the second voltage threshold, the controller controls the second switch K2 in each on-grid unit and the first switch K1 in the another on-grid unit to be turned on. This can reduce scorching generated when another first switch K1 other than the to-be-cleaned first switch K1 and all the second switches K2 are turned on, and prolong a service life.

It should be noted that, after the controller controls the inverter circuit to adjust the output voltage, to adjust the voltage at the alternating current output end connected to the another on-grid unit other than the target on-grid unit, a sequence of turning on the first switch K1 and the second switch K2 in the another on-grid unit and the second switch K2 that does not need to be electrically cleaned and that is in the target on-grid unit may be flexibly adjusted based on an actual requirement. For example, in some application scenarios, the second switches K2 in the on-grid units need to be simultaneously turned on. In this case, the controller may first control the second switches K2 in the on-grid units to be turned on, and then control the first switch K1 in the another on-grid unit other than the target on-grid unit to be turned on. Alternatively, a turning-on sequence may be reversed. Examples are not enumerated in this embodiment of this application.

For example, refer to FIG. 6 again. After the power conversion device determines, through the controller, that the first switch K1 on the alternating current output phase cable A is in the to-be-cleaned state, the power conversion device may control, through the controller, the inverter circuit to adjust a voltage at an alternating current output end connected to the alternating current output phase cable B and a voltage at an alternating current output end connected to the alternating current output phase cable C. When voltages at two ends of an on-grid unit on the alternating current output phase cable B and voltages at two ends of an on-grid unit on the alternating current output phase cable C are less than or equal to the second voltage threshold, the power conversion device may control the second switch K2 on the alternating current output phase cable A, a first switch K1 and a second switch K2 on the alternating current output phase cable B, and a first switch K1 and a second switch K2 on the alternating current output phase cable C to be turned on, to reduce scorching generated when the first switch K1 and the second switch K2 on the alternating current output phase cable B and the first switch K1 and the second switch K2 on the alternating current output phase cable C are turned on.

In some feasible implementations, to reduce scorching generated when the another switch other than the first switch K1 in the to-be-cleaned state is turned on, the controller may further first control the first switch K1 or the second switch K2 in the another on-grid unit to be turned on, and control the second switch K2 in the target on-grid unit to be first turned on. In this case, if one switch (a first switch K1 or a second switch K2) in each on-grid unit is not turned on, a voltage difference between two ends of a second switch K2 or two ends of a first switch K1 that is first turned on may be ignored. Therefore, the second switch K2 or the first switch K1 that is first turned on is not scorched. Further, the controller may control the inverter circuit to adjust the voltage at the alternating current output end connected to the another on-grid unit, to adjust a voltage at an end of the first switch K1 or the second switch K2 that is not turned on and that is in the on-grid unit, so that voltages at two ends of the first switch K1 or two ends of the second switch K2 that is not turned on change, and when the voltages at the two ends of the first switch K1 or the two ends of the second switch K2 that is not turned on are less than or equal to the second voltage threshold, the controller controls the first switch K1 or the second switch K2 that is not turned on to be turned on. It may be understood that when the voltages at the two ends of the first switch K1 or the two ends of the second switch K2 when the first switch K1 or the second switch K2 is turned on are less than or equal to the second voltage threshold, the first switch K1 or the second switch K2 is not scorched.

For example, referring to FIG. 6 again, after the power conversion device determines, through the controller, that the first switch K1 on the alternating current output phase cable A is the to-be-cleaned switch, the power conversion device may first control, through the controller, second switches K2 on the alternating current output phase cable A, the alternating current output phase cable B, and the alternating current output phase cable C to be synchronously turned on or asynchronously turned on. In this case, turning on of the second switches K2 does not cause scorching. Further, after the second switches K2 are turned on, the controller may control the inverter circuit to adjust the voltage at the alternating current output end connected to the alternating current output phase cable B and the voltage at the alternating current output end connected to the alternating current output phase cable C, to adjust a voltage at one end that is of the first switch K1 on the alternating current output phase cable B and that is close to the inverter circuit and a voltage at one end that is of the first switch K1 on the alternating current output phase cable C and that is close to the inverter circuit, so that voltages at two ends of the first switch K1 on the alternating current output phase cable B and voltages at two ends of the first switch K1 on the alternating current output phase cable C change, and when the voltages at the two ends of the first switch K1 on the alternating current output phase cable B and the voltages at the two ends of the first switch K1 on the alternating current output phase cable C are less than or equal to the second voltage threshold, the controller controls the first switch K1 on the alternating current output phase cable B and the first switch K1 on the alternating current output phase cable C to be turned on, to reduce scorching generated when the first switch K1 on the alternating current output phase cable B and the first switch K1 on the alternating current output phase cable C are turned on. It may be understood that, in the another on-grid unit other than the target on-grid unit, a sequence of turning on the first switch K1 and the second switch K2 may also be flexibly adjusted based on an actual requirement. The foregoing is merely an example, and does not constitute a limitation on this embodiment of this application.

In some feasible implementations, in some application scenarios, the first switches K1 in the on-grid units need to be synchronously turned on. In this case, when determining that a first switch K1 is in the to-be-cleaned state, the controller uses an on-grid unit to which the first switch K1 in the to-be-cleaned state belongs as the target on-grid unit. Further, the controller may first control the second switch K2 in each on-grid unit to be turned on, control the inverter circuit to adjust the output voltage after the second switch K2 in each on-grid unit is turned on, to adjust a voltage at one end of the first switch K1 in the target on-grid unit, and control the first switch K1 in each on-grid unit to be synchronously turned on when the voltages at two ends of the first switch K1 in the target on-grid unit are greater than or equal to the first voltage threshold, to electrically clean the first switch K1 in the target on-grid unit.

For example, referring to FIG. 6 again, after the controller shown in FIG. 6 determines that the first switch K1 on the alternating current output phase cable A is in the to-be-cleaned state, when the first switches K1 and the second switches K2 of all the on-grid units are turned off, the controller turns on another second switch K2 other than the first switch K1 on the alternating current output phase cable A, that is, turns on the second switch K2 on the alternating current output phase cable B and the second switch K2 on the alternating current output phase cable C. Further, the controller controls the inverter circuit to adjust the voltage at the alternating current output end corresponding to the alternating current output phase cable A, to adjust a voltage at one end of the first switch K1 on the alternating current output phase cable A, so that the voltages at the two ends of the first switch K1 change, and when the voltages at the two ends of the first switch K1 on the alternating current output phase cable A are greater than or equal to the first voltage threshold, the controller controls all the first switches K1 on the alternating current output phase cable A, the alternating current output phase cable B, and the alternating current output phase cable C to be synchronously turned on, to electrically clean the first switch K1 on the alternating current output phase cable A.

In some feasible implementations, when the first switches K1 in the on-grid units need to be synchronously turned on, to reduce scorching generated when the first switches K1 other than the to-be-cleaned first switch K1 and all the second switches K2 are turned on, when the first switches K1 and the second switches K2 of all the on-grid units are turned off, the controller may first control the inverter circuit to adjust the output voltage until the voltages at the two ends connected to the another on-grid unit are less than or equal to the second voltage threshold, and control the second switch K2 in each on-grid unit to be synchronously turned on or asynchronously turned on. In this case, the first switches K1 in the on-grid units are not turned on, and a voltage difference between two ends of a second switch K2 that is first turned on may be ignored. Therefore, no scorching occurs when the second switch K2 is turned on. Further, after the second switches K2 are turned on, the controller controls the inverter circuit to adjust a voltage at one end of the first switch K1 in the target on-grid unit, and when the voltages at the two ends of the first switch K1 in the target on-grid unit are greater than or equal to the first voltage threshold, the controller controls the first switches K1 in all the on-grid units to be synchronously turned on.

It may be understood that, when the voltages at the two ends of the another on-grid unit are less than or equal to the second voltage threshold, a voltage difference between two ends of a first switch K1 or two ends of a second switch K2 in an on-grid unit is also less than or equal to the second voltage threshold. Therefore, when the voltages at the two ends of the first switch K1 are greater than or equal to the first voltage threshold, the controller controls all the first switches K1 to be synchronously turned on, to electrically clean the first switch K1 in the target on-grid unit. In addition, scorching generated when first switches K1 other than the to-be-cleaned first switch K1 and all the second switches K2 are turned on can be reduced, and a service life can be prolonged.

For example, referring to FIG. 6 again, after the power conversion device determines, through the controller, that the first switch K1 on the alternating current output phase cable A is in the to-be-cleaned state, the power conversion device may control, through the controller, the inverter circuit to adjust the voltage at the alternating current output end connected to the alternating current output phase cable B and the voltage at the alternating current output end connected to the alternating current output phase cable C. When voltages at two ends of an on-grid unit on the alternating current output phase cable B and voltages at two ends of an on-grid unit on the alternating current output phase cable C are less than or equal to the second voltage threshold, the power conversion device may control second switches K2 on the alternating current output phase cable A, the alternating current output phase cable B, and the alternating current output phase cable C to be turned on. Further, the controller controls the inverter circuit to adjust the voltage at the alternating current output end correspondingly connected to the alternating current output phase cable A, and when the voltages at the two ends of the first switch K1 on the alternating current output phase cable A are greater than or equal to the first voltage threshold, the controller controls the first switches K1 in all the on-grid units to be synchronously turned on, to electrically clean the first switch K1 on the alternating current output phase cable A, and reduce scorching generated when the first switch K1 on the alternating current output phase cable B and the first switch K1 on the alternating current output phase cable C are turned on.

In some feasible implementations, when the first switches K1 in the on-grid units need to be synchronously turned on, to reduce scorching generated when the another switch other than the first switch K1 in the to-be-cleaned state is turned on, the controller may alternatively first control a second switch K2 in the another on-grid unit to be first turned on. In this case, the first switches K1 in the on-grid units are not turned on, and a voltage difference between two ends of the second switch K2 that is first turned on may be ignored. Therefore, no scorching occurs when the second switch K2 is turned on. Further, after the second switch K2 is turned on, the controller may control the inverter circuit to adjust a voltage at an alternating current output end connected to each on-grid unit, to adjust a voltage at an end of the first switch K1 in each on-grid unit, so that voltages at two ends of each first switch K1 change, and when the voltages at the two ends of the first switch K1 of the target on-grid unit are greater than or equal to the first voltage threshold and voltages at two ends of the first switch K1 in the another on-grid unit other than the target on-grid unit are less than or equal to the second voltage threshold, the controller controls all the first switches K1 to be synchronously turned on, to electrically clean the first switch K1 in the target on-grid unit. In addition, the first switch K1 in the another on-grid unit is not scorched.

For example, referring to FIG. 6 again, after the power conversion device determines, through the controller, that the first switch K1 on the alternating current output phase cable A is in the to-be-cleaned state, the power conversion device may first control, through the controller, second switches K2 on the alternating current output phase cable A, the alternating current output phase cable B, and the alternating current output phase cable C to be synchronously turned on or asynchronously turned on. In this case, turning on of the second switches K2 does not cause scorching. Further, after the second switches K2 are turned on, the controller may control the inverter circuit to adjust voltages at alternating current output ends connected to the alternating current output phase cable A, the alternating current output phase cable B, and the alternating current output phase cable C, to adjust voltages at ends that are of the first switches K1 on the alternating current output phase cable A, the alternating current output phase cable B, and the alternating current output phase cable C and that are close to the inverter circuit, so that voltages at two ends of the first switches K1 on the alternating current output phase cable A, the alternating current output phase cable B, and the alternating current output phase cable C change, and when the voltages at the two ends of the first switch K1 on the alternating current output phase cable A are greater than or equal to the first voltage threshold, and voltages at two ends of the first switch K1 on the alternating current output phase cable B and voltages at two ends of the first switch K1 on the alternating current output phase cable C are less than or equal to the second voltage threshold, the controller controls the first switches K1 on the alternating current output phase cable A, the alternating current output phase cable B, and the alternating current output phase cable C to be synchronously turned on.

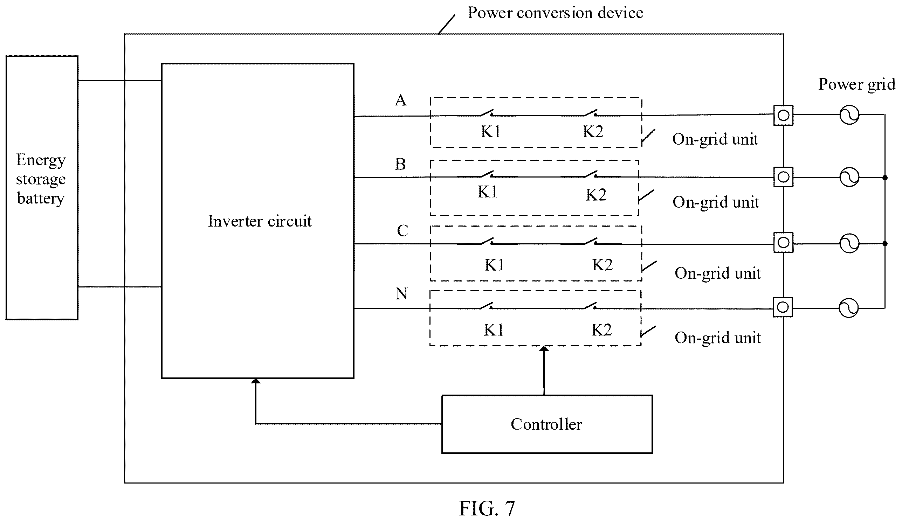

In some feasible implementations, when the power conversion device is connected to the power grid by using a three-phase four-wire system, for a manner of connecting the power conversion device to the power grid, refer to FIG. 7. FIG. 7 is a diagram of still another framework of a power conversion device according to an embodiment of this application.

The power conversion device shown in FIG. 7 includes an inverter circuit, a controller, and four on-grid units. A direct current input end of the inverter circuit is connected to an energy storage battery, four alternating current output ends of the inverter circuit are respectively connected to an alternating current output phase cable A, an alternating current output phase cable B, an alternating current output phase cable C, and an alternating current output phase cable N, and the four on-grid units are respectively disposed on the alternating current output phase cable A, the alternating current output phase cable B, the alternating current output phase cable C, and the alternating current output phase cable N, so that each of the four alternating current output ends of the inverter circuit is connected to the power grid through a corresponding on-grid unit. When all the four on-grid units are turned on, the inverter circuit may perform, under control of the controller, inversion conversion on a direct current provided by the energy storage battery, and output an alternating current obtained through inversion conversion to the power grid for power supply, or the inverter circuit may perform rectification conversion on an alternating current provided by the power grid, and supply a direct current obtained through rectification conversion to the energy storage battery for charging. In addition, when all the four on-grid units are turned off, the inverter circuit is disconnected from the power grid, and the power conversion device no longer exchanges electric energy with the power grid.

A first switch K1 and a second switch K2 are disposed in each of the four on-grid units, and the first switch K1 and the second switch K2 are connected in series between an alternating current output end of the inverter circuit and the power grid. For example, as shown in FIG. 7, one end of the first switch K1 in each on-grid unit is connected to the alternating current output end of the inverter circuit, the other end of the first switch K1 is connected to the second switch K2, and the other end of the second switch K2 connected to the first switch K1 is connected to the power grid. It should be noted that positions of the first switch K1 and the second switch K2 in each on-grid unit may be switched. Specific positions of the first switch K1 and the second switch K2 in each on-grid unit are not limited in this embodiment of this application. FIG. 7 is merely an example.

It may be understood that a first temperature sensor and a second temperature sensor may be disposed in each on-grid unit, to detect operating temperatures of the first switch K1 and the second switch K2 and determine a switch in a to-be-cleaned state. For details, refer to the specific implementations corresponding to FIG. 4 and FIG. 5. Details are not described herein in this embodiment of this application.

Similarly, for a specific implementation principle of electrical cleaning, by the power conversion device shown in FIG. 7 through the controller, a first switch K1 or a second switch K2 in the to-be-cleaned state, refer to the specific implementation in which the power conversion device is connected to the power grid by using the three-phase three-wire system in FIG. 6. For example, when the controller shown in FIG. 7 determines that a first switch K1 on the alternating current output phase cable B is a to-be-cleaned switch, and first switches K1 and second switches K2 of all the on-grid units are turned off, the controller may first control another first switch K1 other than the first switch K1 on the alternating current output phase cable B and all the second switches K2 to be turned on, and control the inverter circuit to adjust a voltage at an alternating current output end connected to the alternating current output phase cable B, to adjust a voltage at one end of the first switch K1 on the alternating current output phase cable B, so that voltages at two ends of the first switch K1 on the alternating current output phase cable B change. When the controller detects that the voltages at the two ends of the first switch K1 on the alternating current output phase cable B are greater than or equal to a first voltage threshold, the controller controls the first switch K1 on the alternating current output phase cable B to be turned on, to implement electrical cleaning. For a specific implementation of the power conversion device shown in FIG. 7, refer to the specific implementation of the power conversion device shown in FIG. 6. Details are not described herein again in this embodiment of this application.

In general, according to the power conversion device provided in this embodiment of this application, an operating temperature of the first switch or the second switch in each on-grid unit may be accurately detected through the first temperature sensor and the second temperature sensor in each on-grid unit, to determine whether the first switch or the second switch needs to be electrically cleaned, that is, whether the first switch or the second switch is in the to-be-cleaned state. Alternatively, in a startup process, the power conversion device may use a first switch as the first switch in the to-be-cleaned state, to actively electrically clean the first switch. When detecting, through the controller, that the first switch is in the to-be-cleaned state, the power conversion device may adjust an output voltage through the controller, and when the voltages at the two ends of the first switch in the to-be-cleaned state are greater than or equal to the first voltage threshold, and the voltages at the two ends of the another on-grid unit other than an on-grid unit to which the first switch in the to-be-cleaned state belongs are less than or equal to the second voltage threshold, the power conversion device may control a second switch that does not need to be electrically cleaned to be first turned on, to reduce scorching caused by the second switch. Further, the power conversion device may control, through the controller, all the first switches to be synchronously turned on, or first control another first switch and another second switch that do not need to be electrically cleaned to be turned on, and then control the first switch in the to-be-cleaned state to be turned on, so that the first switch in the to-be-cleaned state can be separately cleaned, and contact impedance of the first switch can be reduced, thereby reducing heat generation and ensuring safety and stability of the power conversion device. In addition, scorching caused by the another first switch can be reduced. This is easy to implement and has high applicability.

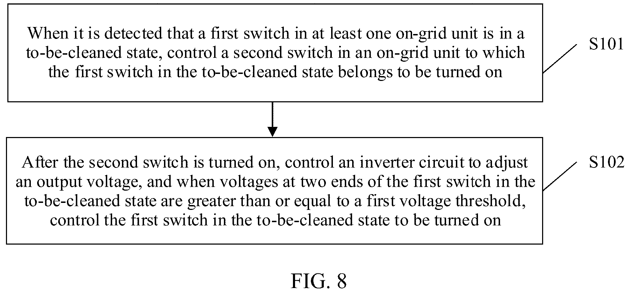

FIG. 8 is a schematic flowchart of a control method for a power conversion device according to an embodiment of this application. The control method for the power conversion device provided in this embodiment of this application is applicable to the controllers shown in FIG. 1 to FIG. 7. Specifically, the control method for the power conversion device may include the following steps:

S101: When it is detected that a first switch in at least one on-grid unit is in a to-be-cleaned state, control a second switch in an on-grid unit to which the first switch in the to-be-cleaned state belongs to be turned on.

It may be understood that, when detecting that the first switch is in the to-be-cleaned state, the power conversion device may first control, through a controller, the second switch in the on-grid unit to which the first switch in the to-be-cleaned state belongs to be turned on. When the second switch is turned on first, the first switch is in a turned-off state, so that a voltage difference between two ends of the second switch is small. Therefore, no scorching occurs when the second switch is turned on.

For a specific implementation of S101, refer to the implementations performed by the controllers in FIG. 1 to FIG. 7. Details are not described herein again in this embodiment of this application.

S102: After the second switch is turned on, control an inverter circuit to adjust an output voltage, and when voltages at two ends of the first switch in the to-be-cleaned state are greater than or equal to a first voltage threshold, control the first switch in the to-be-cleaned state to be turned on.

It may be understood that, after first controlling the second switch to be turned on, the controller controls the inverter circuit to adjust the output voltage, to change the voltages at the two ends of the first switch, and controls the first switch to be turned on when the voltages at the two ends of the first switch are greater than or equal to the first voltage threshold, so that the first switch can be electrically cleaned. Therefore, the power conversion device provided in this embodiment of this application controls a sequence of turning on the first switch and the second switch in the on-grid unit, to electrically clean the first switch. This reduces contact impedance of the first switch, further reduces heat generation, and ensures safety and stability of the power conversion device. In addition, this manner is easy to implement and has high applicability.

For a specific implementation of S102, refer to the implementations performed by the controllers in FIG. 1 to FIG. 7. Details are not described herein again in this embodiment of this application.

In an optional implementation, the power conversion device includes a plurality of alternating current output phase cables and a plurality of corresponding on-grid units; and controlling the second switch in the on-grid unit to which the first switch in the to-be-cleaned state belongs to be turned on specifically includes: controlling the second switch in each on-grid unit and a first switch in another on-grid unit other than the on-grid unit to which the first switch in the to-be-cleaned state belongs in the plurality of on-grid units to be turned on.

It may be understood that the power conversion device may be connected to a power grid through the plurality of alternating current output phase cables and the plurality of corresponding on-grid units. When the power conversion device electrically cleans a first switch in one of the on-grid units, the power conversion device may first control, through the controller, another first switch other than the first switch in the to-be-cleaned state and all the second switches to be first turned on, and may further control, through the controller, the first switch in the to-be-cleaned state to be turned on when the voltages at the two ends of the first switch in the to-be-cleaned state are greater than or equal to the first voltage threshold. In this way, a differential mode loop is formed, to increase a magnitude of a current flowing through the first switch, thereby better cleaning the first switch.

In an optional implementation, controlling the second switch in each on-grid unit and the first switch in the another on-grid unit other than the on-grid unit to which the first switch in the to-be-cleaned state belongs in the plurality of on-grid units to be turned on specifically includes: controlling the inverter circuit to adjust the output voltage; and when voltages at two ends of the another on-grid unit other than the on-grid unit to which the first switch in the to-be-cleaned state belongs are less than or equal to the second voltage threshold, controlling the second switch in each on-grid unit and the first switch in the another on-grid unit other than the on-grid unit to which the first switch in the to-be-cleaned state belongs to be turned on.

It may be understood that, before electrically cleaning the first switch in the to-be-cleaned state, the power conversion device may first adjust the output voltage through the controller, so that the voltages at the two ends of the another on-grid unit other than the on-grid unit to which the first switch in the to-be-cleaned state belongs are less than or equal to the second voltage threshold. In this case, if a voltage difference between the two ends of the another on-grid unit is small, the power conversion device controls all the second switches and the first switch in the another on-grid unit to be turned on, to reduce scorching.

In an optional implementation, controlling the second switch in each on-grid unit and the first switch in the another on-grid unit other than the on-grid unit to which the first switch in the to-be-cleaned state belongs in the plurality of on-grid units to be turned on specifically includes: controlling a second switch in any one of the another on-grid unit other than the on-grid unit to which the first switch in the to-be-cleaned state belongs to be turned on; after controlling the second switch in any one of the another on-grid unit other than the on-grid unit to which the first switch in the to-be-cleaned state belongs to be turned on, controlling the inverter circuit to adjust the output voltage; and when voltages at two ends of a first switch in any one of the another on-grid unit other than the on-grid unit to which the first switch in the to-be-cleaned state belongs are less than or equal to a second voltage threshold, controlling the first switch in any one of the another on-grid unit other than the on-grid unit to which the first switch in the to-be-cleaned state belongs to be turned on.

It may be understood that, before electrically cleaning the first switch in the to-be-cleaned state, the power conversion device may first control, through the controller, a switch in the another on-grid unit to be turned on, and then adjust, through the controller, a voltage output by the inverter circuit, so that voltages at two ends of the other switch that is not turned on in the another on-grid unit are less than or equal to the second voltage threshold. In this case, when the power conversion device controls the switch that is not turned on to be turned on, scorching can be reduced.

In an optional implementation, the power conversion device includes a plurality of alternating current output ends and a plurality of corresponding on-grid units; and controlling the second switch in the on-grid unit to which the first switch in the to-be-cleaned state belongs to be turned on, controlling the inverter circuit to adjust the output voltage after the second switch is turned on, and controlling the first switch in the to-be-cleaned state to be turned on when the voltages at the two ends of the first switch in the to-be-cleaned state are greater than or equal to the first voltage threshold specifically include: controlling the second switch in each on-grid unit to be turned on; controlling the inverter circuit to adjust the output voltage after controlling the second switch in each on-grid unit to be turned on; and controlling the first switch in each on-grid unit to be synchronously turned on when the voltages at the two ends of the first switch in the to-be-cleaned state are greater than or equal to the first voltage threshold.

It may be understood that the power conversion device may be connected to the power grid through the plurality of alternating current output phase cables and the plurality of corresponding on-grid units. When the first switches in all the on-grid units need to be synchronously turned on, and the power conversion device electrically cleans a first switch in one of the on-grid units, the power conversion device first controls, through the controller, all the second switches to be first turned on, and then controls all the first switches to be synchronously turned on when the voltages at the two ends of the to-be-cleaned first switch are greater than or equal to the first voltage threshold, so that the to-be-cleaned first switch can be electrically cleaned.

In an optional implementation, controlling the second switch in each on-grid unit to be turned on specifically includes: controlling the inverter circuit to adjust the output voltage, and when voltages at two ends of the another on-grid unit other than the on-grid unit to which the first switch in the to-be-cleaned state belongs are less than or equal to a second voltage threshold, controlling the second switch in each on-grid unit to be turned on.

It may be understood that, when the first switches in the on-grid units need to be synchronously turned on, and the power conversion device electrically cleans a first switch in one of the on-grid units, the power conversion device may first adjust the output voltage of the inverter circuit through the controller, so that the voltages at the two ends of the another on-grid unit other than the on-grid unit to which the first switch in the to-be-cleaned state belongs are less than or equal to the second voltage threshold. In this case, when the power conversion device controls, through the controller, all the second switches to be synchronously turned on or asynchronously turned on, the second switches are not scorched. Further, when the power conversion device controls, through the controller, all the first switches to be turned on, the to-be-cleaned first switch can be electrically cleaned separately, and other first switches that do not need to be cleaned are not scorched.

In an optional implementation, controlling the inverter circuit to adjust the output voltage, and controlling the first switch in each on-grid unit to be synchronously turned on when the voltages at the two ends of the first switch in the to-be-cleaned state are greater than or equal to the first voltage threshold specifically include: controlling the inverter circuit to adjust the output voltage; and when the voltages at the two ends of the first switch in the to-be-cleaned state are greater than or equal to the first voltage threshold, and voltages at two ends of a first switch in another on-grid unit other than the on-grid unit to which the first switch in the to-be-cleaned state belongs are less than or equal to a second voltage threshold, controlling the first switch in each on-grid unit to be synchronously turned on.

It may be understood that the power conversion device may be connected to the power grid through the plurality of on-grid units. When the first switches in all the on-grid units need to be synchronously turned on, and the power conversion device electrically cleans a first switch in one of the on-grid units, the power conversion device first controls, through the controller, all the second switches to be synchronously turned on or asynchronously turned on, then adjusts the output voltage through the controller, and when the voltages at the two ends of the first switch in the to-be-cleaned state are greater than or equal to the first voltage threshold, and the voltages at the two ends of the another first switch are less than or equal to the second voltage threshold, controls all the first switches to be synchronously turned on. In this way, the first switch in the to-be-cleaned state can be electrically cleaned, and other first switches that do not need to be cleaned are not scorched.

In an optional implementation, the on-grid unit further includes a first temperature sensor and a second temperature sensor, the first temperature sensor is configured to obtain an operating temperature of the first switch, the second temperature sensor is configured to obtain an operating temperature of the second switch, and the to-be-cleaned state includes: The operating temperature of the first switch is greater than or equal to a temperature threshold.

It may be understood that the power conversion device may separately detect the operating temperatures of the first switch and the second switch by disposing the first temperature sensor and the second temperature sensor in the on-grid unit, to accurately detect a first switch or a second switch in the to-be-cleaned state.

In an optional implementation, the power conversion device further includes a circuit board, the inverter circuit is integrated on the circuit board, the alternating current output phase cable of the inverter circuit is connected to a power pin of the first switch or a power pin of the second switch in the corresponding on-grid unit through a wire on the circuit board, and the power pin of the first switch is connected to the power pin of the second switch. The first temperature sensor is disposed on the power pin of the first switch, and the second temperature sensor is disposed on the power pin of the second switch.

It may be understood that the first temperature sensor may be disposed on the power pin of the first switch, and the second temperature sensor may be disposed on the power pin of the second switch, to improve temperature detection accuracy.

In an optional implementation, the power conversion device further includes a circuit board, the inverter circuit is integrated on the circuit board, the alternating current output phase cable of the inverter circuit is connected to a power pin of the first switch or a power pin of the second switch through a wire on the circuit board, and the power pin of the first switch is connected to the power pin of the second switch. The first temperature sensor is disposed on a wire connecting the circuit board and the power pin of the first switch, and the second temperature sensor is disposed on a wire connecting the circuit board and the power pin of the second switch.

It may be understood that the first temperature sensor may be disposed on the wire connecting the circuit board and the power pin of the first switch, and the second temperature sensor may be disposed on the wire connecting the circuit board and the power pin of the second switch, to improve temperature detection accuracy.

In an optional implementation, detecting that the first switch in the at least one on-grid unit is in the to-be-cleaned state specifically includes: when the first switch and the second switch in each on-grid unit are turned on and it is detected that an operating temperature of a first switch in the at least one on-grid unit is abnormal, controlling the first switch and the second switch in each on-grid unit to be turned off, and using the first switch whose operating temperature is abnormal as the first switch in the to-be-cleaned state.

It may be understood that, when the power conversion device is on-grid and detects that the operating temperature of the first switch is abnormal, the power conversion device may first control all the first switches and the second switches to be turned off, use the first switch whose operating temperature is abnormal as the first switch in the to-be-cleaned state, and electrically clean the first switch whose operating temperature is abnormal in time, to ensure running safety of the device.

In an optional implementation, detecting that the first switch in the at least one on-grid unit is in the to-be-cleaned state specifically includes: when the power conversion device is in a startup process, and the first switch and the second switch in each on-grid unit are turned off, using the first switch in the at least one on-grid unit as the first switch in the to-be-cleaned state.

It may be understood that, in the startup process, the power conversion device may use the first switch as the first switch in the to-be-cleaned state, to electrically clean the first switch, thereby improving running reliability of the device.

## Claims

1. A power conversion device, wherein the power conversion device comprises an inverter circuit, a controller, and at least one on-grid unit, the inverter circuit comprises at least one alternating current output phase cable, each alternating current output phase cable is configured to connect to a power grid through a corresponding on-grid unit, and each on-grid unit comprises a first switch and a second switch that are connected in series; and
the controller is configured to:
when detecting that the first switch in the at least one on-grid unit is in a to-be-cleaned state, control the second switch in an on-grid unit to which the first switch in the to-be-cleaned state belongs to be turned on; after the second switch is turned on, control the inverter circuit to adjust an output voltage; and when voltages at two ends of the first switch in the to-be-cleaned state are greater than or equal to a first voltage threshold, control the first switch in the to-be-cleaned state to be turned on.

2. The power conversion device according to claim 1, wherein the power conversion device comprises a plurality of alternating current output phase cables and a plurality of corresponding on-grid units, and when controlling the second switch in the on-grid unit to which the first switch in the to-be-cleaned state belongs to be turned on, the controller is specifically configured to:
control the second switch in each on-grid unit and a first switch in another on-grid unit other than the on-grid unit to which the first switch in the to-be-cleaned state belongs in the plurality of on-grid units to be turned on.

3. The power conversion device according to claim 2, wherein when controlling the second switch in each on-grid unit and the first switch in the another on-grid unit other than the on-grid unit to which the first switch in the to-be-cleaned state belongs in the plurality of on-grid units to be turned on, the controller is specifically configured to:
control the inverter circuit to adjust the output voltage; and when voltages at two ends of the another on-grid unit other than the on-grid unit to which the first switch in the to-be-cleaned state belongs are less than or equal to a second voltage threshold, control the second switch in each on-grid unit and the first switch in the another on-grid unit other than the on-grid unit to which the first switch in the to-be-cleaned state belongs to be turned on.

4. The power conversion device according to claim 2, wherein when controlling the second switch in each on-grid unit and the first switch in the another on-grid unit other than the on-grid unit to which the first switch in the to-be-cleaned state belongs in the plurality of on-grid units to be turned on, the controller is specifically configured to:
control a second switch in any one of the another on-grid unit other than the on-grid unit to which the first switch in the to-be-cleaned state belongs to be turned on; after controlling the second switch in any one of the another on-grid unit other than the on-grid unit to which the first switch in the to-be-cleaned state belongs to be turned on, control the inverter circuit to adjust the output voltage; and when voltages at two ends of a first switch in any one of the another on-grid unit other than the on-grid unit to which the first switch in the to-be-cleaned state belongs are less than or equal to a second voltage threshold, control the first switch in any one of the another on-grid unit other than the on-grid unit to which the first switch in the to-be-cleaned state belongs to be turned on.

5. The power conversion device according to claim 1, wherein the power conversion device comprises a plurality of alternating current output ends and a plurality of corresponding on-grid units; and when controlling the second switch in the on-grid unit to which the first switch in the to-be-cleaned state belongs to be turned on, controlling the inverter circuit to adjust the output voltage after the second switch is turned on, and controlling the first switch in the to-be-cleaned state to be turned on when the voltages at the two ends of the first switch in the to-be-cleaned state are greater than or equal to the first voltage threshold, the controller is specifically configured to:
control the second switch in each on-grid unit to be turned on; after controlling the second switch in each on-grid unit to be turned on, control the inverter circuit to adjust the output voltage; and when the voltages at the two ends of the first switch in the to-be-cleaned state are greater than or equal to the first voltage threshold, control the first switch in each on-grid unit to be synchronously turned on.

6. The power conversion device according to claim 5, wherein when controlling the second switch in each on-grid unit to be turned on, the controller is specifically configured to:
control the inverter circuit to adjust the output voltage; and when voltages at two ends of another on-grid unit other than the on-grid unit to which the first switch in the to-be-cleaned state belongs are less than or equal to a second voltage threshold, control the second switch in each on-grid unit to be turned on.

7. The power conversion device according to claim 5, wherein when controlling the inverter circuit to adjust the output voltage, and controlling the first switch in each on-grid unit to be synchronously turned on when the voltages at the two ends of the first switch in the to-be-cleaned state are greater than or equal to the first voltage threshold, the controller is specifically configured to:
control the inverter circuit to adjust the output voltage; and when the voltages at the two ends of the first switch in the to-be-cleaned state are greater than or equal to the first voltage threshold, and voltages at two ends of a first switch in another on-grid unit other than the on-grid unit to which the first switch in the to-be-cleaned state belongs are less than or equal to a second voltage threshold, control the first switch in each on-grid unit to be synchronously turned on.

8. The power conversion device according to any one of claims 1 to 7, wherein when detecting that the first switch in the at least one on-grid unit is in the to-be-cleaned state, the controller is specifically configured to:
when the first switch and the second switch in each on-grid unit are turned on, and it is detected that an operating temperature of a first switch in the at least one on-grid unit is abnormal, control the first switch and the second switch in each on-grid unit to be turned off, and use the first switch whose operating temperature is abnormal as the first switch in the to-be-cleaned state.

9. The power conversion device according to claim 8, wherein the on-grid unit further comprises a first temperature sensor and a second temperature sensor, the first temperature sensor is configured to obtain an operating temperature of the first switch, and the second temperature sensor is configured to obtain an operating temperature of the second switch.

10. The power conversion device according to claim 9, wherein the power conversion device further comprises a circuit board, the inverter circuit is integrated on the circuit board, the alternating current output phase cable of the inverter circuit is connected to a power pin of the first switch or a power pin of the second switch in the corresponding on-grid unit through a wire on the circuit board, and the power pin of the first switch is connected to the power pin of the second switch; and
the first temperature sensor is disposed on the power pin of the first switch, and the second temperature sensor is disposed on the power pin of the second switch.

11. The power conversion device according to claim 9, wherein the power conversion device further comprises a circuit board, the inverter circuit is integrated on the circuit board, the alternating current output phase cable of the inverter circuit is connected to a power pin of the first switch or a power pin of the second switch through a wire on the circuit board, and the power pin of the first switch is connected to the power pin of the second switch; and
the first temperature sensor is disposed on a wire connecting the circuit board and the power pin of the first switch, and the second temperature sensor is disposed on a wire connecting the circuit board and the power pin of the second switch.

12. The power conversion device according to any one of claims 1 to 7, wherein when detecting that the first switch in the at least one on-grid unit is in the to-be-cleaned state, the controller is specifically configured to:
when the power conversion device is in a startup process, and the first switch and the second switch in each on-grid unit are turned off, use the first switch in the at least one on-grid unit as the first switch in the to-be-cleaned state.

13. A power supply system, wherein the power supply system comprises an energy storage battery and the power conversion device according to any one of claims 1 to 12, and the power conversion device is configured to convert a direct current from the energy storage battery into an alternating current.

14. A control method for a power conversion device, wherein the power conversion device comprises an inverter circuit and at least one on-grid unit, the inverter circuit comprises at least one alternating current output phase cable, each alternating current output phase cable is configured to connect to a power grid through a corresponding on-grid unit, and each on-grid unit comprises a first switch and a second switch that are connected in series; and
the method comprises:
when it is detected that the first switch in the at least one on-grid unit is in a to-be-cleaned state, controlling the second switch in an on-grid unit to which the first switch in the to-be-cleaned state belongs to be turned on; after the second switch is turned on, controlling the inverter circuit to adjust an output voltage; and when voltages at two ends of the first switch in the to-be-cleaned state are greater than or equal to a first voltage threshold, controlling the first switch in the to-be-cleaned state to be turned on.
